(19) Europäisches Patentamt / European Patent Office / Office européen des brevets

(11) **EP 2 385 486 B1**

(12) **FASCICULE DE BREVET EUROPEEN**

(45) Date de publication et mention
de la délivrance du brevet:
**13.03.2013 Bulletin 2013/11**

(51) Int Cl.:
**G06K 9/00** *(2006.01)*     **G01J 5/34** *(2006.01)*

(21) Numéro de dépôt: **11165201.2**

(22) Date de dépôt: **06.05.2011**

(54) **Transducteur de variation temporelle de température, puce électronique incorporant ce transducteur et procédé de fabrication de cette puce**

WANDLER FÜR ZEITLICHE TEMPERATURVARIATION, ELEKTRONISCHER CHIP EINSCHLISSLICH DES WANDLERS UND ZUGEHÖRIGES VERFAHREN ZUR HERSTELLUNG

Transducer for temporal variation of temperature, electronic chip including transducteur and method for manufacturing chip

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2010 FR 1053554**

(43) Date de publication de la demande:
**09.11.2011 Bulletin 2011/45**

(73) Titulaire: **Commissariat à l'Énergie Atomique et aux Énergies Alternatives**
**75015 Paris (FR)**

(72) Inventeurs:
• **Mainguet, Jean-François**
**38100, GRENOBLE (FR)**
• **Chambron, Alain**
**38120, SAINT-EGREVE (FR)**
• **Charrat, Bruno**
**38120, SAINT-EGREVE (FR)**
• **Defay, Emmanuel**
**38340, VOREPPE (FR)**
• **Parat, Guy-Michel**
**38640, CLAIX (FR)**

(74) Mandataire: **Colombo, Michel et al**
**Brevinnov**
**324, rue Garibaldi**
**69007 Lyon (FR)**

(56) Documents cités:
EP-A1- 0 840 250     DE-A1- 19 634 849
FR-A1- 2 736 179     US-A1- 2006 108 528
US-A1- 2008 121 927

• Jacob Fraden: "32.7 Pyroelectric Thermometers" In: John G. Webster: "MEASUREMENT INSTRUMENTATION, AND SENSORS HANDBOOK", 1 janvier 1999 (1999-01-01), CRC Press and Springer, XP002616906, ISBN: 3-540-64830-5 pages 32-109-32-117, * Pyroelectric Effect, second paragraph; pages 32-109 * * Pyroelectric Materials, last paragraph; pages 32-110 - pages 32-111 *

EP 2 385 486 B1

**Description**

L'invention concerne un transducteur de variation temporelle de température en une différence de potentiels. L'invention concerne également une puce électronique pour la détection de motif thermique incorporant ce transducteur ainsi qu'un procédé de fabrication de cette puce.

Typiquement, une puce électronique est réalisée par un procédé de fabrication microélectronique, c'est-à-dire par dépôt de couches successives sur un substrat et par gravure de certaines de ces couches, par exemple, par photolithographie.

Les transducteurs connus comportent :

- une électrode conductrice supérieure destinée à être exposée à la variation temporelle de température à mesurer,
- une électrode conductrice inférieure,
- au moins une couche en matériau pyroélectrique directement interposée entre ces électrodes pour générer entre ces électrodes la différence de potentiels correspondant à la variation de température, même en absence de contrainte mécanique extérieure.

Par exemple, un tel transducteur est divulgué dans la demande de brevet US 4 429 413 dans le cadre d'un détecteur d'empreinte digitale.

Une contrainte mécanique extérieure est une contrainte mécanique appliquée sur l'électrode supérieure par un objet amovible extérieur au transducteur.

Il est important que le matériau pyroélectrique utilisé ait un coefficient pyroélectrique aussi élevé que possible. Par coefficient pyroélectrique, on désigne ici le rapport $\gamma$ défini par la relation suivante : $\gamma = \Delta P/\Delta T$, où :

- $\Delta T$ est la variation de température, et
- $\Delta P$ est la différence de potentiels obtenue en réponse à la variation $\Delta T$ de température.

Le coefficient $\gamma$ doit être élevé car les variations de température à détecter sont très faibles, c'est-à-dire inférieures à 1 °C et, de préférence, inférieures à 0,1 °C. De plus, la surface d'échange thermique entre le transducteur et l'objet appliqué sur ce transducteur est souvent très faible c'est-à-dire inférieure à 1 mm$^2$ et typiquement inférieure à 5000 ou 3000 $\mu$m$^2$. Il faut donc utiliser un matériau pyroélectrique qui permet d'obtenir la plus grande différence de potentiels possible en réponse à ces faibles variations de température pour amplifier le signal.

Les transducteurs connus sont donc uniquement réalisés avec des matériaux pyroélectriques présentant de fort coefficient pyroélectrique, c'est-à-dire supérieur à 20 $\mu$C/m$^2$/K. Par exemple les matériaux pyroélectriques utilisés sont :

a) des polymères tels que le polyfluorure de vinylidène (PVDF) dont le coefficient pyroélectrique est de l'ordre de 40 $\mu$C/m$^2$/k,

b) des céramiques telles que la céramique connue sous l'acronyme de PZT (titano-zirconate de plomb («Lead zirconate titanate » en anglais) dont le coefficient pyroélectrique est d'environ 350 $\mu$C/m$^2$/K, ou

c) des cristaux tels que ceux connus sous l'acronyme TGS (Tris Glycine SDF) ou des cristaux LiTaO$_3$.

Par ailleurs, il est souhaitable que la taille du transducteur soit aussi petite que possible pour accroître sa résolution spatiale. Par exemple, la face sensible du transducteur doit être inférieure à 1 mm$^2$ et de préférence inférieure à 0,5 ou 0,3 mm$^2$.

La face sensible du transducteur est la face de ce transducteur par l'intermédiaire de laquelle est captée la variation de température a convertir en une différence de potentiels.

A cause de ces petites dimensions, le transducteur doit de préférence être fabriqué par des procédés de fabrication microélectronique c'est-à-dire les même procédés collectifs de fabrication que ceux utilisés pour fabriquer les puces électroniques utilisées pour réaliser des calculateurs ou autres. Par exemple, ces procédés collectifs de fabrication utilisent le dépôt et la gravure sur un substrat de couches empilées les unes sur les autres. Typiquement, le substrat est une galette (plus connue sous le terme anglais de « wafer ») en silicium ou en verre.

Les matériaux pyroélectriques connus ayant de fort coefficient pyroélectrique sont difficiles à mettre en oeuvre dans les procédés de fabrication microélectronique.

Par exemple, le polymère PVDF doit être polarisé après son dépôt avec une tension de quelques centaines de volts et une fois polarisé, les autres opérations de fabrication doivent être réalisées à des températures inférieures à 120 °C pour que le polymère PVDF ne perde pas ses propriétés pyroétectriques.

Les céramiques nécessitent dés températures de fabrication élevées, c'est-à-dire des températures supérieures à 600 °C, et donc bien supérieures à une température de 400 à 450 °C généralement donnée comme limite supérieure pour la mise en oeuvre d'un procédé de fabrication microélectronique. Ainsi, les transducteurs connus sont difficiles à fabriquer.

De l'état de la technique est également connu de :

- EPO 840 250A1,
- FR2 736 179A1,
- DE 196 34 849A1,
- Jacob Fraden : « 33.7 Pyroelectric Thermometer », In : JohnG.Webster : « Measurment instrumentation, and sensors handbook », 1 janvier 1999, CRS Press and Spinger, ISBN : 3-540-64830-5, page32-109 - 32-117

L'invention vise donc à proposer un transducteur plus facile à fabriquer avec les procédés de fabrication microélectronique. Elle a donc pour objet un transducteur de variation temporelle de température dans lequel le matériau pyroélectrique est à base de nitrure III-V.

Par « est à base de nitrure III-V», on désigne une couche en matériau pyroélectrique qui comprend au moins 10% en masse et, de préférence, au moins 25, 50 ou 75% en masse d'un nitrure ou d'un mélange de nitrures III-V.

Un nitrure III-V est un nitrure appartenant au groupe des semi-conducteurs composites fabriquées à partir d'un ou plusieurs éléments de la colonne III du tableau périodique des éléments (aluminium, gallium, ...) et d'un ou plusieurs éléments de la colonne V (azote, phosphore, arsenic, antimoine, ...). Les nitrures 111-V comprennent notamment le nitrure d'Aluminium, le nitrure de Gallium et le nitrure d'Indium.

Les propriétés pyroélectriques des nitrures 111-V sont connues. Toutefois, ceux-ci n'ont pas été utilisés jusqu'à présent pour former la couche en matériau pyroélectrique d'un transducteur étant donné leur faible coefficient pyroélectrique inférieur à 6 ou 8 $\mu C/m^2/K$.

Plus précisément, en pratique, lorsqu'un nitrure 111-V, tel que le nitrure d'aluminium, est utilisé pour réaliser un transducteur, ce sont ses propriétés piézoélectriques qui sont exploitées et les transducteurs ainsi réalisés sont donc des transducteurs de pression et non pas de température (voir par exemple la demande de brevet US 7 032 454). Pour exploiter les propriétés piézoélectriques du nitrure d'aluminium, des espaces doivent être prévus pour permettre au nitrure d'aluminium de se déformer.

Toutefois, ce faible coefficient pyroélectrique est compensé par une faible permittivité diélectrique relative de l'ordre de 10. En effet, la faible constante diélectrique des nitrures III-V permet d'obtenir une différence de potentiels importante entre les électrodes supérieure et inférieure ce qui augmente sa sensibilité. Cette augmentation de la sensibilité liée à sa faible constante diélectrique compense au moins en partie la perte de sensibilité causée par son faible coefficient pyroélectrique. Ainsi, un nitrure 111-V permet de construire un transducteur de variation temporelle de température ayant une sensibilité proche de celle obtenue avec un autre matériau pyroélectrique ayant des coefficients pyroélectriques bien plus élevés.

De plus, les nitrures 111-V présentent l'avantage d'être très faciles à mettre en oeuvre par les procédés de fabrication microélectronique. Cet avantage est présenté dans le cas particulier du nitrure d'Aluminium (AIN) mais se retrouve aussi avec les autres nitrures 111-V. Par exemple, le nitrure d'aluminium n'a pas besoin d'être polarisé par une différence de potentiels pour présenter des propriétés pyroélectriques comme c'est le cas des polymères PVDF. Les effets pyroélectriques de la couche de nitrure d'aluminium sont donc actifs et mesurables dès son dépôt sur un substrat. Il est alors possible de tester le bon fonctionnement de cette couche de nitrure d'aluminium bien plus tôt dans le procédé de fabrication et donc de détecter très tôt d'éventuelles anomalies ou dysfonctionnements.

Le nitrure d'aluminium ne présente pas de température de Curie au-delà de laquelle il perd ses propriétés pyroélectriques. Les opérations qui suivent le dépôt de la couche de nitrure d'aluminium, comme par exemple des opérations de soudure ou de dépôt de couches supplémentaires, ne sont donc pas limitées par la température du nitrure d'aluminium comme c'est le cas avec les autres matériaux pyroélectriques tels que le polymère PVDF dont la température de Curie est de l'ordre de 125 °C.

Ce transducteur qui utilise une couche à base de nitrure 111-V comme un matériau pyroélectrique présente donc des performances proches de celles des transducteurs utilisant des matériaux à fort coefficient pyroélectrique tout en étant beaucoup plus simple à fabriquer par les procédés de fabrication microélectronique.

Les modes de réalisation de ce transducteur peuvent comporter une ou plusieurs des caractéristiques suivantes :

■ le matériau pyroélectrique est à base de nitrure d'aluminium;
■ l'électrode supérieure est réalisée en molybdène ou en Titane;
■ l'électrode supérieure est réalisée dans un métal conducteur dont seule la face supérieure opposée à la face en contact avec la couche en matériau pyroélectrique est oxydée de manière à modifier sa couleur par rapport au cas où cette électrode supérieure ne serait pas oxydée;
■ le transducteur comporte un substrat sur lequel sont empilées au moins l'électrode inférieure, la couche pyroélectrique puis l'électrode supérieure.

Ces modes de réalisation de ce transducteur présentent en outre les avantages suivants :

- le fait de réaliser l'électrode supérieure en molybdène (Mo) ou en titane (Ti) permet d'améliorer la protection du transducteur car le molybdène et le titane sont des matériaux très résistants à l'abrasion et aux attaques chimiques,
- le fait d'oxyder l'électrode supérieure permet de colorer simplement la face sensible du transducteur sans avoir recours à un vernis ou à une peinture de couleur susceptible d'isoler thermiquement le transducteur.

L'invention a également pour objet une puce électronique pour la détection de motif thermique, cette puce comportant :

- au moins le transducteur ci-dessus de variation temporelle de température en une différence de potentiels,
- au moins une résistance se présentant sous la forme d'une bande résistive gravée dans une même couche que l'électrode inférieure et/ou supérieure du transducteur pour chauffer la couche pyroélectrique de ce transducteur lors qu'elle est parcourue par un courant, la bande résistive traversant cette électrode de manière à la diviser en au moins deux plaques séparées, et
- des plots électriques permettant de court-circuiter électriquement les plaques séparées par-dessus et/ou par-dessous le plan de la couche dans laquelle la bande résistive est formée..

Le fait d'utiliser une bande résistive qui découpe l'électrode en plusieurs plaques séparées les unes des autres simplifie la réalisation de la résistance chauffante tout en minimisant la surface qu'occupe cette bande résistive dans le transducteur. Cela permet également de répartir plus uniformément la chaleur au sein du transducteur.

Les modes de réalisation de cette puce peuvent comporter la caractéristique suivante :

- la puce comprend un réseau de transducteurs répartis les uns à côté des autres pour former une face sensible sur laquelle un objet présentant le motif thermique à détecter peut venir en appui, et
- l'électrode supérieure ou inférieure de chaque transducteur présente une surface d'au plus 0,5 mm$^2$ et le centre de cette électrode est séparé du centre de l'électrode du transducteur immédiatement contigu par une distance d'au plus 0,5 mm.

Ce mode de réalisation de la puce présente en outre l'avantage suivant :

- l'utilisation d'une multitude de transducteurs de petites tailles et très rapprochés les uns des autres permet de détecter une empreinte digitale.

Enfin, l'invention a également pour objet un procédé collectif de fabrication de plusieurs puces électroniques comportant chacune au moins le transducteur ci-dessus et un circuit de lecture de ce transducteurs, ce procédé comportant :

- le dépôt et la gravure sur un substrat de l'électrode conductrice inférieure simultanément pour tous les transducteurs des différentes puces électroniques fabriquées sur le même substrat,
- le dépôt d'au moins une couche en matériau pyroélectrique simultanément pour tous les transducteurs des différentes puces fabriquées sur le même substrat, la couche en matériau pyroélectrique étant réalisée à base de nitrure 111-V ,
- le dépôt et/ou la gravure de l'électrode conductrice supérieure simultanément pour tous les transducteurs des différentes puces fabriquées sur ce même substrat pour que la couche en matériau pyroélectrique génère une différence de potentiels entre ces électrodes en réponse à une variation de température même en absence de contrainte mécanique extérieure, et
- le découpage du substrat pour séparer mécaniquement les différentes puces électroniques fabriquées.

Les modes de réalisation du procédé collectif de fabrication peuvent présenter la caractéristique suivante :

■ le procédé comporte l'oxydation de la face supérieure de l'électrode supérieure tournée du côté opposé à la couche en matériau pyroélectrique simultanément pour tous les transducteurs des différentes puces électroniques fabriquées sur le même substrat.

L'invention sera mieux comprise à la lecture de la description qui va suivre, donnée uniquement à titre d'exemple non limitatif et faite en se référant aux dessins sur lesquels :

- la figure 1 est une illustration schématique d'un détecteur de motif thermique,
- la figure 2 est une illustration schématique et partielle de la répartition de pixels du détecteur de la figure 1 sur une face sensible,
- la figure 3 est un graphe illustrant la variation de température mesurée par un transducteur du détecteur de la figure 1 dans deux situations différentes,
- la figure 4 est une illustration schématique en coupe transversale de la structure d'un transducteur normal du détecteur de la figure 1,
- la figure 5 est une illustration schématique et en vue de dessus de la structure d'une électrode inférieure du transducteur de la figure 4,
- la figure 6 est une illustration schématique et en coupe verticale d'un transducteur de calibration du détecteur de la figure 1,
- la figure 7 est une illustration schématique d'un circuit de lecture des transducteurs du détecteur de la figure 1,
- la figure 8 est un organigramme d'un procédé de fabrication des transducteurs du détecteur de la figure 1,
- la figure 9 est un organigramme d'un procédé de calibration des transducteurs de la figure 1,
- la figure 10 est un graphe illustrant les mesures réalisées lors de la mise en oeuvre du procédé de la figure 9, et
- la figure 11 est un organigramme d'un procédé de fonctionnement du détecteur de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

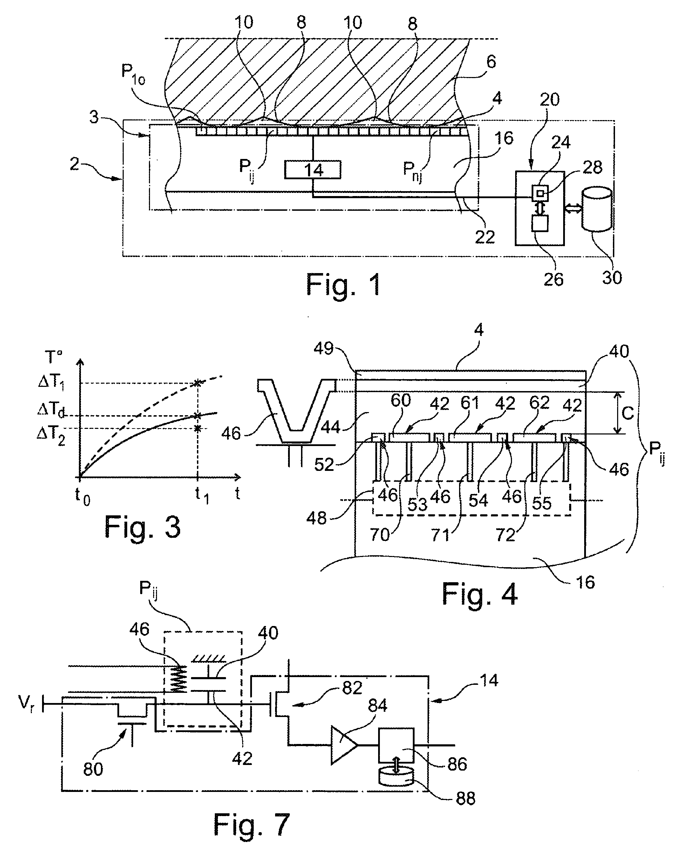

La figure 1 représente un détecteur 2 d'un motif thermique.

Un motif thermique est une répartition spatiale non homogène des caractéristiques thermiques d'un objet décelable à partir d'une puce électronique 3 du détecteur 2. Un tel motif thermique est généralement porté par un objet. Dans ce mode de réalisation, une empreinte digitale est un motif thermique détectable à partir du détecteur 2.

Par caractéristique thermique, on désigne les propriétés d'un objet qui sont fonctions de sa capacité thermique et de sa conductivité thermique.

Dans la suite de cette description, le détecteur 2 est décrit dans le cas particulier où celui-ci est spécialement adapté à la détection d'une empreinte digitale. Dans ce cas particulier, le détecteur 2 est plus connu sous le terme de détecteur d'empreinte digitale.

La puce 3 présente une face sensible 4 sur laquelle doit être appliqué l'objet incorporant le motif thermique à relever. Ici, cet objet est un doigt 6 dont l'épiderme est directement en appui sur la face 4. L'empreinte digitale présente sur l'épiderme du doigt 6 se traduit par la présence de crêtes 8 séparées par des creux 10. Sur la figure 1, le doigt 6 est grossi plusieurs fois pour rendre visible les crêtes 8 et les creux 10.

Lorsque le doigt 6 est en appui sur la face 4, seules les crêtes 8 sont directement en contact avec la face 4. Au contraire, les creux 10 sont isolés de la face 4 par de l'air. Ainsi, la conductivité thermique entre le doigt et la face 4 est meilleure au niveau des crêtes 8 qu'au niveau des creux 10. Une empreinte digitale correspond donc à un motif thermique susceptible d'être relevé par la puce 3.

A cet effet, la puce 3 comprend une multitude de pixels $P_{ij}$ de détection disposés immédiatement les uns à côté des autres sur toute la face 4. Un pixel $P_{ij}$ de détection est la plus petite surface autonome capable de détecter une variation de température. Les variations de température détectées varient d'un pixel à l'autre selon que celui-ci est en contact avec une crête 8 ou en vis-à-vis d'un creux 10.

Ces pixels $P_{ij}$ sont réalisés sur un même substrat 16.

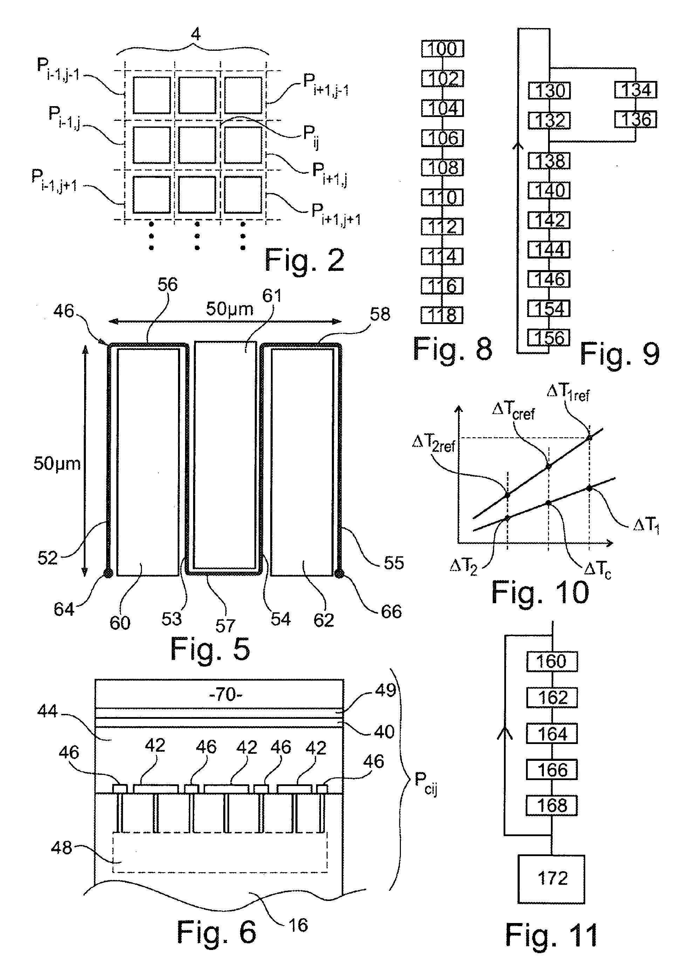

Un exemple de répartition des pixels $P_{ij}$ les uns à côté de autres est représenté sur la figure 2. Dans cet exemple, les pixels $P_{ij}$ sont répartis en lignes et en colonnes pour former une matrice de pixels. Par exemple, la puce 3 comprend au moins deux ou cinq lignes d'au moins 100 ou 150 pixels chacune.

Chaque pixel définit une fraction de la face 4. Ici, ces fractions de la face 4 sont rectangulaires et délimitées par des lignes en pointillée sur la figure 2. La surface de chaque fraction est inférieure à 1 mm² et, de préférence, inférieure à 0,5 ou 0,01 ou 0,005 mm². Ici, la fraction de la face 4 définie par chaque pixel $P_{ij}$ est un carré de 50 μm de côté. La distance entre le centre géométrique de deux pixels contigus est inférieure à 1 mm et, de préférence, inférieure à 0,5 ou 0,1 ou 0,01 ou 0,001 mm. Ici, la distance entre les centres des pixels $P_{ij}$ contigus est égale à 50 μm.

Chaque pixel comprend :

- un transducteur capable de transformer une variation de température en une différence de potentiels, et
- une résistance chauffante capable de chauffer l'objet en contact avec ce transducteur.

La différence de potentiels représente « la mesure » de la variation de température dans le sens où, après calibration, cette différence de potentiels peut être directement convertie en une variation de température.

Cette résistance chauffante permet de mettre en oeuvre un procédé actif de détection comme celui décrit dans la demande de brevet US 6 091 837. Le principe de fonctionnement de ce procédé actif de détection est rappelé en regard de la figure 3. Sur la figure 3, la ligne en trait continu représente l'évolution de la température d'un transducteur directement en contact avec une crête 8 du doigt 6. La courbe en pointillée représente quant à elle l'évolution de la température d'un transducteur en vis-à-vis d'un creux 10. Lorsque le transducteur est directement en contact avec la crête 8, la température dissipée par la résistance chauffante de ce pixel se traduit par une élévation moins rapide de la température étant donné qu'une partie de cette chaleur est directement transmise au doigt 6. A l'inverse, lorsqu'un transducteur est en face d'un creux 10, la conductivité thermique entre ce transducteur et le doigt 6 est plus faible et la chaleur produite par la résistance du pixel conduit à une augmentation plus rapide de la température de ce pixel. Ainsi, lorsque la variation de température entre les instants $t_0$ et $t_1$ est relevée par les transducteurs, ceux directement en contact avec une crête 8 relève une variation $\Delta T_d$ de température plus faible que la variation $\Delta T_1$ relevée par les pixels en face des creux 10. Cette différence de variation de température permet de détecter la présence d'un creux ou d'une crête à un emplacement particulier sur la face 4.

Les procédés actifs de détection présentent plusieurs avantages dont notamment le fait de pouvoir fonctionner même si la température initiale des pixels est proche ou identique de celle de l'objet portant le motif thermique. Il est également possible d'ajuster le contraste en contrôlant la quantité de chaleur dissipée par la résistance de chauffage de chaque pixel.

Chaque pixel $P_{ij}$ est électriquement raccordé à un circuit 14 de lecture des mesures de variation de température réalisées par chacun de ces pixels. Plus précisément, le circuit 14 est apte :

- à sélectionner un ou plusieurs pixels $P_{ij}$ à lire,
- à commander la résistance chauffante du ou des pixels sélectionnés, et
- à lire la variation de température mesurée par le transducteur du ou des pixels sélectionnés.

Typiquement, le circuit de lecture est gravé et/ou déposé dans le même substrat 16 rigide que celui sur lequel sont réalisés les pixels $P_{ij}$. Par exemple, le substrat 16 est en silicium ou en verre.

Le détecteur 2 comprend également un calculateur électronique 20 raccordé par une liaison filaire 22 à la puce 3. Par exemple, ce calculateur 20 est équipé d'un module 24 de pilotage de la puce 3 et d'un module 26 de traitement.

Le module 24 permet de relever le motif thermique à partir des mesures des pixels de détection. Plus précisément, ce module est capable de construire une carte des crêtes et des creux détectés par les différents pixels en fonction des mesures des pixels et de la position connue de ces pixels les uns par rapport aux autres.

Ce module 24 est ici également équipé d'un sous-module 28 de calibration de la puce 3 dont le fonctionnement est décrit en regard du procédé de la figure 9.

Ici, le module 26 est capable de comparer le motif thermique relevé à une base de données préenregistrées de motifs thermiques pour identifier un motif thermique particulier et, en réponse, autoriser ou au contraire interdire certaines actions comme par exemple l'accès à un bâtiment.

Alternativement ou en complément, le module 26 est également capable d'afficher le motif thermique relevé sur un écran. Cela permet par exemple de grossir le motif thermique relevé.

Typiquement, le calculateur 20 est réalisé à partir d'au moins un calculateur électronique programmable capable d'exécuter des instructions enregistrées sur un support d'enregistrement d'informations. A cet effet, le calculateur 20 est raccordé à une mémoire 30 contenant des instructions et les données nécessaires pour l'exécution les procédés des figures 9 et 11. En particulier, la mémoire 30 contient des valeurs $\Delta T_{1\text{réf}}$, $\Delta T_{2\text{réf}}$ et $\Delta T_{\text{créf}}$ nécessaires pour la calibration de la puce 3. Ces valeurs sont décrites plus loin en regard de la figure 9.

La puce 3 comprend deux types de pixels $P_{ij}$ : des pixels « normaux », notés $P_{nij}$, et des pixels de calibration notés $P_{cij}$. Les pixels $P_{nij}$ sont qualifiés de « normaux » car il constitue la majorité des pixels (par exemple plus de 90% des pixels $P_{ij}$) de la puce 3. Ils sont tous identiques les uns aux autres. Par « identique », on désigne le fait qu'ils présentent les mêmes caractéristiques thermiques et qu'ils sont tous obtenus par le même procédé de fabrication. La figure 4 représente un exemple particulier de réalisation d'un pixel normal $P_{nij}$ de la puce 3.

Le pixel $P_{nij}$ comprend une électrode supérieure 40 et une électrode inférieure 42 entre lesquelles est interposée une couche 44 en matériau pyroélectrique.

Ici, l'électrode 40 est commune à l'ensemble des pixels de la puce 3. Cette électrode 40 est raccordée à la masse par l'intermédiaire d'un plot de masse 46. L'électrode 40 est celle qui se retrouve interposée entre le doigt 6 et la couche 44 lorsque ce doigt est appliqué sur la face 4. Elle est donc réalisée de manière à conduire efficacement et rapidement la chaleur vers la couche 44. Ici, elle est réalisée dans un matériau bon conducteur thermique, c'est-à-dire ayant une conductivité thermique supérieure à 10 $W.m^{-1}.K^{-1}$. Elle présente également une faible épaisseur c'est-à-dire une épaisseur inférieure à 100 $\mu$m et, de préférence, inférieure à 1 $\mu$m. Ici, cette électrode supérieure est réalisée en molybdène (Mo).

Dans ce mode de réalisation, la couche 44 est réalisée en nitrure d'aluminium. Ici, par « réalisé en» on désigne une couche qui est réalisée presque exclusivement dans le même matériau. Ainsi, le nitrure d'aluminium représente plus de 90% et, de préférence, plus de 95% en masse de la couche 44. La couche 44 est également commune à l'ensemble des pixels de la puce 3. L'épaisseur de la couche 44 est supérieure à 0,5 ou 0,6 $\mu$m et avantageusement supérieure à 1 $\mu$m . En effet, plus l'épaisseur de la couche est importante, plus les charges générées dans le matériau seront importantes. Ici, son épaisseur est de l'ordre de 2 à 3 $\mu$m. Cette couche convertit une variation de température en une différence de potentiels entre les électrodes 40 et 42.

L'électrode inférieure 42 est spécifique à chaque pixel et électriquement isolée des électrodes inférieures des autres pixels. Elle permet de relever la différence de potentiels générée par la couche 44 au niveau du pixel $P_{ij}$. Par exemple, cette électrode inférieure est réalisée en molybdène et son épaisseur est de 50 nm.

Le pixel $P_{nij}$ comprend également une résistance chauffante 46 formée dans la même couche que celle utilisée pour former l'électrode 42. Cette résistance chauffante permet de chauffer la couche 44 pour mettre en oeuvre le procédé actif de détection.

L'électrode 42 et la résistance 46 sont raccordées au circuit 14 par l'intermédiaire de pistes conductrices 48 symbolisées par un rectangle en pointillé.

Le pixel $P_{nij}$ comporte également une couche protectrice 49 déposée sur l'électrode supérieure 40 de manière à la protéger encore plus contre l'abrasion et les attaques chimiques ainsi que contre l'oxydation. Cette couche protectrice est réalisée dans un matériau bon conducteur thermique. Elle présente également une faible épaisseur. Par exemple, l'épaisseur de la couche 49 est strictement inférieure à 100 $\mu$m et, de préférence, inférieure à 10 $\mu$m. Par exemple, la couche protectrice est une couche de nitrure d'aluminium (AlN) de quelques micromètres d'épaisseur.

La figure 5 représente un agencement particulier de la résistance 46 pour que celle-ci présente une résistance supérieure à 1 K$\Omega$ tout en occupant moins de 15 % de la surface du pixel $P_{nij}$. Ici, la résistance 46 est réalisée en molybdène étant donné que celle-ci est obtenue par gravure de la même couche que celle utilisée pour réaliser l'électrode inférieure 42. La résistance 46 est une bande résistive conformée en méandre. Plus précisément, la bande résistive est composée de plusieurs brins primaires 52 à 55 qui s'étendent parallèlement les uns aux autres. Ces brins sont raccordés en série. Pour cela, les extrémités des brins 52 à 55 sont raccordés les unes aux autres par des brins secondaires 56 à 58 qui s'étendent perpendiculairement aux brins primaires. Ici, la résistance 46 découpe l'électrode inférieure 42 en trois plaques rectangulaires identiques 60 à 62. Chaque plaque 60 à 62 fait par exemple 49 $\mu$m de long sur 15 $\mu$m de large. La bande résistive est espacée de 0,5 $\mu$m des différentes plaques 60 à 62 de manière à être électriquement isolée de ces plaques. La largeur de la bande résistive est de 0,5 $\mu$m et sa longueur totale est de 250 $\mu$m. Etant donné que l'épaisseur de la bande résistive est la même que celle de l'électrode inférieure c'est-à-dire 50 nm, la résistance de cette bande résistive entre ses deux extrémités 64 et 66 est d'environ 1 K$\Omega$ lorsqu'elle est réalisée en molybdène ayant une résistance de 10 $\mu\Omega$.cm. Avec une telle conformation, la résistance 46 occupe moins de 12 % de la surface du pixel $P_{nij}$.

Les plaques 60 à 62 sont court-circuitées entre elles par l'intermédiaire de plots verticaux 70 à 72 (figure 4).

Les extrémités 64 et 66 de la résistance 46 sont également raccordées par l'intermédiaire de plots verticaux aux pistes 48.

De manière à faciliter la calibration de la puce 3, celle-ci comporte également au moins un pixel de calibration $P_{cij}$ dont les caractéristiques thermiques sont différentes des pixels normaux $P_{nij}$.

La figure 6 représente un exemple de réalisation d'un tel pixel $P_{cij}$. Le pixel $P_{cij}$ est identique au pixel $P_{nij}$ à l'exception du fait qu'au-dessus de la couche protectrice 49, une couche supplémentaire 70 a été déposée. A cause de cette couche 70, la capacité thermique et/ou la conductivité thermique du pixel $P_{cij}$ sont différentes de celles du pixel $P_{nij}$. Ainsi, dans les mêmes conditions, la variation de température mesurée à l'instant $t_1$ après que la résistance chauffante 46 ait été alimentée est différente de celle mesurée par les pixels $P_{ij}$.

La figure 7 représente un exemple de réalisation du circuit 14 de lecture. Sur cette figure, un pixel $P_{ij}$ à lire est symboliquement représenté sous la forme d'un condensateur dont l'électrode 40 est raccordée à la masse et l'électrode 42 est raccordée au circuit 14.

Le circuit 14 comprend un jeu de transistors de réinitialisation du potentiel de l'électrode 42 de l'un quelconque des pixels de la puce 3. Pour simplifier la figure 7, seul un transistor 80 de ce jeu est représenté. Ce transistor raccorde électriquement l'électrode 42 à un potentiel initial $V_r$ lorsque celui-ci est passant et, en alternance, laisse le potentiel de l'électrode 42 flotter lorsque ce transistor 80 est non-passant. Lorsque le potentiel de l'électrode 42 est flottant, la différence de potentiels $\Delta V_p$ entre les électrodes 40 et 42 est fonction de la variation $\Delta T$ de température. Par exemple, la relation entre la différence de potentiels $\Delta V_p$ et la variation $\Delta T$ de température est modélisée par la relation suivante :

$$\Delta V_p = \gamma \ e \ \Delta T / \varepsilon_0 \varepsilon_r, \text{ où}$$

-   e est l'épaisseur de la couche 44
-   $\gamma$ est le coefficient pyroélectrique du matériau utilisé pour réaliser la couche 44,
-   $\varepsilon_0$ et $\varepsilon_r$ sont, respectivement, la permittivité absolue du vide et la permittivité relative du matériau pyroélectrique.

Le circuit 14 comprend également un jeu de transistors permettant de sélectionner l'un quelconque des pixels $P_{ij}$ particulier de la puce 3 lorsque celui-ci est passant. Pour simplifier la figure 7, seul un transistor 82 de ce jeu a été représenté. Lorsque le transistor 82 est passant, il raccorde électriquement l'électrode 42 à un amplificateur 84 de la différence de potentiels $\Delta V_p$ du pixel sélectionné.

Le circuit 14 comprend également un convertisseur 86 analogique-numérique apte à échantillonner le signal analogique amplifié en sortie de l'amplificateur 84 pour le transmettre au calculateur 20. Ce convertisseur 86 est raccordé à une mémoire volatile 88 contenant des bornes $B_{min}$ et $B_{max}$ définissant la plage de tension à échantillonner par le convertisseur 86.

De manière à obtenir la sensibilité maximale, idéalement, la borne $B_{min}$ doit correspondre à la variation $\Delta T_d$ de température obtenue quand le pixel $P_{nij}$ est directement en contact avec la crête 8 ayant la meilleure conductivité thermique possible. De façon similaire, idéalement, la borne $B_{max}$ doit correspondre à la variation $\Delta T_1$ de température mesurée par le pixel $P_{nij}$ lorsque celui-ci est uniquement en contact avec de l'air.

Ces bornes $B_{min}$ et $B_{max}$ dépendent des caractéristiques thermiques du pixel $P_{nij}$ mais surtout des caractéristiques électriques des différents composants électroniques du circuit 14. En effet, les dimensions caractéristiques du pixel sont très nettement supérieures au micromètre et de l'ordre de plus d'une dizaine de micromètres. Par conséquent, une légère imprécision de moins d'un micromètre lors de la fabrication de ce transducteur a peu d'influence sur les caractéristiques thermiques du pixel. La répétabilité et la reproductibilité des caractéristiques thermiques des pixels est bonne.

A l'inverse, les composants électroniques du circuit 14 tels que les transistors 80 et 82 ont des dimensions caractéristiques très nettement inférieures au micromètre. Ainsi, la même imprécision de moins d'un micromètre lors de la fabrication de l'un de ces composants entraine un fonctionnement très différent. Par conséquent, la répétabilité et la reproductibilité des caractéristiques électriques du circuit 14 est beaucoup plus mauvaise. Ainsi, on peut considérer que les caractéristiques thermiques des pixels d'une puce à une autre sont sensiblement constantes si le même procédé de fabrication est utilisé. Par contre, les caractéristiques électriques présentent une variabilité beaucoup plus grande d'une puce à une autre même si le même procédé de fabrication est utilisé.

Le procédé collectif de fabrication de la puce 3 va maintenant être décrit plus en détail en regard de la figure 8. Ce procédé est « collectif » dans le sens où plusieurs puces sont simultanément fabriquées sur le même substrat.

Initialement, lors d'une étape 100, les circuits 14 et les différentes pistes 48 des différentes puces à fabriquer sont gravés sur le même substrat 16.

Ensuite, lors d'une étape 102, les plots verticaux tels que les plots 70 à 72 pour raccorder les électrodes inférieures et les extrémités 64 et 66 des résistances chauffantes aux pistes 48 sont réalisés.

Puis, lors d'une étape 104, une couche en molybdène est uniformément déposée sur l'ensemble du substrat pour venir en contact électrique avec les différents plots verticaux précédemment réalisés.

Lors d'une étape 106, cette couche en molybdène est gravée, par exemple par photolithographie, pour former en une seule et même opération les différentes électrodes inférieures de chaque transducteur de chaque puce et, en même temps, la résistance 46 de chacun des pixels des différentes puces.

Ensuite, lors d'une étape 108, la couche 44 de nitrure d'aluminium est déposée sur l'ensemble du substrat de manière à former en une seule opération la couche en matériau pyroélectrique de chacun des transducteurs de chacune des puces.

Lors d'une étape 110, cette couche en nitrure d'aluminium est gravée, par exemple par photolithographie, pour former les plots 46 de raccordement de l'électrode supérieure à la masse.

Lors d'une étape 112, une couche en molybdène est déposée sur l'ensemble du substrat pour former l'électrode supérieure commune à l'ensemble des transducteurs de chaque puce.

Lors d'une étape 114, l'électrode supérieure est oxydée sur une profondeur prédéterminée de manière à obtenir la couleur souhaitée. La couleur obtenue dépend de la profondeur d'oxydation. Cette oxydation peut être réalisée uniformément sur l'ensemble de la face supérieure de l'électrode supérieure ou, sélectivement, sur quelques parties uniquement de cette face supérieure de manière, par exemple, à dessiner un logo.

Ici, l'électrode supérieure n'est oxydée que sur une fraction de son épaisseur pour conserver au maximum les propriétés thermiques et électriques du molybdène.

Ensuite, lors d'une étape 116, la couche protectrice 49 est déposée sur l'ensemble du substrat.

La couche supplémentaire 70 des pixels $P_{cij}$ est également réalisée lors de l'étape 116. Par exemple, une surépaisseur du même matériau que celui utilisé pour la couche 49 est uniquement réalisée au-dessus des pixels $P_{cij}$.

Enfin, lors d'une étape 118, le substrat est découpé de manière à séparer mécaniquement les unes des autres les différentes puces électroniques réalisées sur ce substrat.

Une fois réalisée, la puce électronique est implémentée dans un détecteur de motif thermique tel que le détecteur 2. Toutefois, avant qu'elle puisse être utilisée, de manière à maximiser sa sensibilité, cette puce est calibrée.

Un procédé de calibration de ces puces électroniques va maintenant être décrit en regard du procédé de la figure 9.

Dans le procédé de la figure 9, des mesures sont d'abord relevées sur une puce électronique de référence puis utilisées pour calibrer une puce électronique. Ici, la puce de référence comporte les mêmes transducteurs que ceux de la puce à calibrer. Par exemple, la puce de référence est identique à la puce à calibrer, c'est-à-dire qu'elles ont été obtenues par le même procédé de fabrication. Bien que le même procédé de fabrication ait été utilisé, les circuits 14 de lecture de ces puces peuvent ne pas présenter exactement les mêmes caractéristiques électriques à cause des imprécisions de fabrication.

Initialement, lors d'une étape 130, au moins l'un des pixels $P_{nij}$ de la puce de référence est mis directement en contact avec un premier élément ayant des premières caractéristiques thermiques. Ici, ce premier élément est choisi pour correspondre à l'élément ayant la plus mauvaise conductivité thermique susceptible d'être rencontrée lors de l'utilisation du détecteur 2. Par exemple, dans ce cas, le premier élément est l'air ambiant.

Ensuite, lors d'une étape 132, la variation $\Delta T_{1réf}$ de température mesurée par ce pixel $P_{nij}$ est lue par le circuit 14 de la puce de référence. Le procédé de lecture d'une variation $\Delta T$ de température à l'aide d'un pixel est décrit plus en détail en regard de la figure 11.

En parallèle, lors d'une étape 134, le pixel $P_{cij}$ de la puce de référence est aussi mis en contact avec le même premier élément, c'est-à-dire l'air. Lors d'une étape 136, le circuit 14 mesure alors la variation $\Delta T_{créf}$ de température correspondante.

Puisque lors des étapes 132 et 134, les mesures sont réalisées avec l'air ambiant, on parle de mesure « à vide ».

Ensuite, lors d'une étape 138, au moins l'un des pixels $P_{nij}$ de la puce de référence est mis en contact avec un second élément ayant des caractéristiques thermiques différentes du premier élément. Ici, ce second élément est choisi pour correspondre à l'élément ayant la meilleure conductivité thermique susceptible d'être rencontré lors d'un usage normal du détecteur 2. Etant donné que la peau et l'épiderme sont essentiellement constitués d'eau, le second élément est ici approximé par de l'eau.

Lors d'une étape 140, le circuit 14 de la puce de référence est utilisé pour relever la variation $\Delta T_{2réf}$ de température mesurée par ce pixel $P_{cij}$.

Lors d'une étape 142, les variations $\Delta T_{1réf}$, $\Delta T_{créf}$ et $\Delta T_{2réf}$ sont enregistrées dans la mémoire 30 de tout détecteur utilisant une puce fabriquée par le même procédé de fabrication que celui de la puce de référence. Par exemple, ces variations sont enregistrée dans le code du sous-module 28 de calibration.

Généralement, la variation $\Delta T_{créf}$ correspond à la variation de température qui serait mesurée si le pixel $P_{nij}$ était mis en contact avec un objet dont les caractéristiques thermiques sont situées entre celles des premier et second éléments. Les variations $\Delta T_{1réf}$, $\Delta T_{créf}$ et $\Delta T_{2réf}$ mesurées lors des étapes 130 à 140 avec la puce de référence peuvent donc être représentées sur le même graphe (figure 10) en fonction des caractéristiques thermiques de l'objet mis en contact avec le pixel $P_{nij}$. Ici, on suppose que les variations de température mesurées varient linéairement en fonction des caractéristiques thermiques de l'objet.

Lors d'une seconde phase, la puce à calibrer est calibrée en utilisant les variations $\Delta T_{1réf}$, $\Delta T_{créf}$ et $\Delta T_{2réf}$ enregistrée dans la mémoire 30 du détecteur 2 incorporant cette puce.

Plus précisément, lors d'une étape 144, au moins un des pixels $P_{nij}$ et le pixel $P_{cij}$ de la seconde puce est mis en contact avec le même premier élément que lors de l'étape 130, c'est-à-dire l'air.

Lors d'une étape 146, le circuit 14 de la puce à calibrer relève les variations $\Delta T_1$ et $\Delta T_c$ de température mesurées, respectivement, par les pixels $P_{nij}$ et $P_{cij}$. Une mesure à vide est donc réalisée lors de l'étape 146.

Ensuite, lors d'une étape 154, la variation $\Delta T_2$ de température qui serait mesurée par le pixel $P_{nij}$ de la puce à calibrer si celui-ci était mis en contact avec le second élément, c'est-à-dire avec l'eau, est déterminée sans que ce pixel soit réellement mis en contact avec l'eau. Plus précisément, la variation $\Delta T_2$ est déterminée à partir d'une relation prédéterminée qui la relie aux variations mesurées $\Delta T_1$ et $\Delta T_c$. Cette relation est déterminée à partir des variations $\Delta T_{1ref}$, $\Delta T_{2réf}$ et $\Delta T_{créf}$.

Pour simplifier les explications, on suppose ici que les variations $\Delta T$ mesurées varies linéairement en fonction de la caractéristique thermique de l'objet appliqué sur la face 4. Il existe donc un rapport $\alpha$ de proportionnalité entre, par exemple, les écarts $\Delta T_{2\,réf} - \Delta T_{1réf}$ et $\Delta T_{1réf} - \Delta T_{créf}$. On suppose que ce rapport $\alpha$ est conservée d'une puce à une autre. Cette hypothèse est raisonnable puisque les caractéristiques thermiques des pixels sont plus stables d'une puce à une autre que les caractéristiques électriques des circuits 14. Dans ces conditions, la relation prédéterminée qui relie la variation $\Delta T_2$ aux variations mesurées $\Delta T_1$ et $\Delta T_c$ est, par exemple, la suivante :

$$\Delta T_2 = \Delta T_1 - (\Delta T_{2\,réf} - \Delta T_{1\,réf}) (\Delta T_1 - \Delta T_c)/(\Delta T_{1\,réf} - \Delta T_{créf})$$

Lors d'une étape 156, le sous-module 28 utilise les variations $\Delta T_1$ et $\Delta T_2$ pour régler la puce, c'est-à-dire déterminer au moins un paramètre de réglage de la puce. Chaque paramètre de réglage de la puce modifie le fonctionnement ou les performances de la puce lorsqu'il est modifié. Ici, le réglage consiste à ajuster la sensibilité du circuit 14. Plus précisément, les paramètres de réglage sont deux bornes $B_{min}$ et $B_{max}$ du convertisseur 86. Ces bornes sont calculées à partir des variations $\Delta T_1$ et $\Delta T_2$ pour maximiser la sensibilité du circuit 14. Par exemple, la borne $B_{min}$

correspond à la variation $\Delta T_2$ et la borne $B_{max}$ correspond à la variation $\Delta T_1$. Ce calcul est par exemple effectué par le sous-module 28 puis les valeurs des bornes $B_m$in et $B_{max}$ sont enregistrées dans la mémoire 88.

Les étapes 154 et 156 forment une phase de calibration de la puce électronique. Cette phase de calibration est systématiquement déclenchée après chaque mise sous tension de la puce suivie d'une utilisation de la puce pour relever un motif thermique.

De préférence, le procédé de calibration est exécuté par le sous-module 28 lors de chaque mise sous tension de la puce électronique 3. Ainsi, il n'est pas nécessaire de stocker sur la puce électronique 3 elle-même les variations $\Delta T_{1ref}$, $\Delta T_{2réf}$ et $\Delta t_{créf}$ ou le rapport $\alpha$.

Le fonctionnement du détecteur 2 et plus précisément du circuit 14 va maintenant être décrit en regard du procédé de la figure 11.

Pour relever un motif thermique, les mesures de chaque pixel $P_{nij}$ de la puce 3 sont acquises. Pour cela, initialement, lors d'une étape 160, le transistor 80 est commandé pour raccorder l'électrode 42 au potentiel d'initialisation $V_r$. Typiquement, le potentiel d'initialisation est bas si la variation de température conduit à augmenter la tension et au contraire haut si la variation de température à mesurer conduit à diminuer cette tension.

Ensuite, lors d'une étape 162, le circuit 14 fait circuler un courant dans la résistance chauffante 46 pour chauffer le pixel $P_{nij}$. Éventuellement, lors de l'étape 162, le circuit 14 commande également le passage d'un courant entre les bornes des résistances chauffantes de tous les pixels immédiatement adjacents aux pixels utilisés pour réaliser la mesure. Ceci permet d'augmenter la puissance calorifique délivrée.

Ensuite, lors d'une étape 164, le transistor 80 est commandé pour devenir non passant. La tension sur l'électrode 42 est donc flottante et suit à partir de cet instant la variation de température. L'ouverture du transistor 80 est appliquée uniquement après la mise sous-tension de la résistance chauffante 46 de sorte que les perturbations liées à l'allumage de la résistance chauffante n'ont pas d'incidence sur le fonctionnement ultérieur du pixel $P_{nij}$.

Lors d'une étape 166, le transistor 82 est commandé pour sélectionner le pixel $P_{nij}$. A partir de ce moment, l'électrode 42 est électriquement raccordé à l'amplificateur 84 puis au convertisseur analogique-numérique 86. La différence de potentiels entre les électrodes 40 et 42 est alors échantillonnée puis transmise au calculateur 20.

Enfin, lors d'une étape 168, après la lecture de la différence de potentiels entre les électrodes 40 et 42, la résistance chauffante 46 est arrêtée.

Les étapes 160 à 168 sont réitérées pour tous les pixels $P_{nij}$ de la puce 3. Cette itération pour tous les pixels de la puce permet de construire une carte du motif thermique. Typiquement, plus de 100 ou 1000 cartes sont construites par seconde.

Lors d'une étape 172, les différentes cartes construites sont traitées par l'unité 26 pour révéler le motif thermique et, en réponse, déclencher certaines actions.

De nombreux autres modes de réalisation sont possibles. Par exemple, les électrodes supérieures ou inférieures peuvent être réalisées dans d'autres matériaux tels que le tungstène tel que le titane.

L'électrode supérieure n'est pas nécessairement commune à l'ensemble des pixels.

La couche protectrice peut être omise ou réalisée dans d'autres matériaux que le nitrure d'aluminium. Lorsque la couche protectrice est omise, l'objet qui porte le motif thermique à détecter vient directement en appui sur l'électrode supérieure. Lorsque la couche protectrice est réalisée dans un autre matériau, elle peut être réalisée en nitrure de silicium.

La couche en matériau pyroélectrique n'est pas nécessairement uniquement réalisée en nitrure d'aluminium. En effet, la couche en matériau pyroélectrique peut être un mélange de nitrure d'aluminium et d'un ou plusieurs autres matériaux ne gênant pas la circulation des charges entre les électrodes. La proportion de nitrure d'aluminium dans ce mélange est alors d'au moins 10, 25, 50 ou 75% en masse. Les autres matériaux peuvent être ou non eux-mêmes des matériaux pyroélectriques.

Dans tous les modes de réalisation décrit ici, le nitrure d'aluminium peut être remplacé par un ou un mélange de nitrures choisis dans le groupe composé des nitrures 111-V. En particulier, la couche en matériau pyroélectrique peut être réalisée à base d'un nitrure ou d'un mélange de nitrures choisis dans le groupe composé du nitrure d'aluminium, du nitrure de gallium et du nitrure d'indium.

D'autres couches peuvent être introduites en plus de la couche pyroélectrique à base de nitrure III-V entre les électrodes inférieure et supérieure. Pour que le transducteur fonctionne, ce ou chacune de ces couches supplémentaires est réalisée dans un matériau qui ne gêne pas la circulation des charges entres ces électrodes. Ce ou ces couches supplémentaires peuvent être réalisées dans d'autres matériaux pyroélectriques. Par exemple, entre les électrodes, au moins une couche en nitrure d'aluminium est empilée sur ou sous une autre couche en PZT (« Lead zirconate titanate » en anglais) ou en carbone.

La résistance chauffante peut être formée dans la même couche de matériau que celle gravée pour former l'électrode supérieure.

La résistivité de la résistance 46 peut être augmentée en amincissant l'épaisseur de la bande résistive.

Dans d'autres modes de réalisation, la résistance chauffante peut être commune à plusieurs pixels. Dans ce cas, par exemple, la bande résistive traverse plusieurs pixels avant de rejoindre ses extrémités 64 et 66.

Dans un autre mode de réalisation, la résistance chauffante ne sépare pas l'électrode en plusieurs plaques. Par exemple, la résistance chauffante peut être conformée pour s'étendre le long de la périphérie extérieure de l'électrode. Par exemple, la résistance chauffante s'étend le long de plus de 80 % de la périphérie de cette électrode.

La résistance chauffante peut également être enfouie sous l'électrode inférieure et non pas nécessairement réalisée au même niveau que celle-ci.

Le sous-module 28 de calibration peut également être implanté dans la puce électronique. De préférence, il est alors implémenter sous forme matérielle (ou « hardware » en anglais) dans le substrat 16.

Les valeurs des variations $\Delta T_1$ et $\Delta T_2$ peuvent aussi être utilisées par d'autres applications que le réglage de la sensibilité du convertisseur analogique-numérique. Toute étape consistant à utiliser la variation $\Delta T_2$ déterminée sans mise en contact avec le second élément est ici considérée comme étant une étape de calibration. Par exemple, ces variations $\Delta T_1$ et $\Delta T_2$ sont utilisées pour régler un amplificateur analogique qui n'amplifie le signal mesuré que si celui-ci est contenu entre des bornes $B_{minA}$ et $B_{maxA}$. Par exemple, la borne $B_{minA}$ est réglée en fonction de la variation $\Delta T_1$ et le gain de l'amplificateur est réglé en fonction des variations $\Delta T_1$ et $\Delta T_2$.

Plusieurs pixels de calibration $P_{cij}$ peuvent être utilisés. Ces pixels de calibration n'ont pas tous forcément les mêmes caractéristiques thermiques. En particulier, si la relation entre $\Delta T_c$, $\Delta T_1$ et $\Delta T_2$ n'est pas linéaire, alors plusieurs pixels de calibration ayant des caractéristiques thermiques différentes sont utilisés pour déterminer $\Delta T_2$ sans avoir à appliquer le second élément sur la puce.

Si plusieurs pixels de calibration ayant des caractéristiques thermiques différents sont utilisés, il n'est également pas nécessaire de mesurer la différence de potentiels à vide d'un pixel normal $P_{nij}$ pour déterminer $\Delta T_1$. Par exemple, si la relation entre les variations de températures et les variations de la caractéristique thermique de l'objet est linéaire, alors deux pixels de calibration ayant des caractéristiques thermiques différentes sont suffisants pour déterminer $\Delta T_2$ sans qu'aucune mesure soit réalisée avec le pixel normal $P_{nij}$.

Les rôles des pixels normaux $P_{nij}$ et de calibration $P_{cij}$ peuvent être inversés dans le procédé de calibration décrit précédemment.

Il est également possible de prévoir un pixel de calibration dont la caractéristique thermique est modifiée de manière à mesurer une variation de température correspondant au contact avec le second élément lorsqu'il est en contact avec le premier élément. Par exemple, la couche supplémentaire 70 est remplacée par une capsule contenant de l'eau.

D'autres modes de réalisation du pixel de calibration $P_{cij}$ sont possibles. Par exemple, une masse métallique importante est disposée à proximité de la résistance chauffante pour agir comme un radiateur dissipant la chaleur et empêchant ce pixel de chauffer trop rapidement.

Dans un autre mode de réalisation, la résistance chauffante du pixel $P_{cij}$ est diminuée par rapport à celle d'un pixel normal.

Le circuit de lecture des transducteurs n'est pas nécessairement commun à l'ensemble des pixels du détecteur de motif thermique. Par exemple, en variante, un premier circuit de lecture est prévu pour la lecture des pixels normaux et un second circuit de lecture indépendant est prévu pour la lecture des pixels de calibrations.

L'utilisation d'une couche à base de nitrure 111-V, et en particulier à base de nitrure d'aluminium, comme matériau pyroélectrique s'applique aussi bien à des pixels passifs de détection qu'à des pixels actifs de détection. Les pixels passifs de détection sont des pixels dépourvus de résistance chauffante. Dans ces conditions, le pixel ne chauffe pas l'objet pour révéler le motif thermique mais exploite seulement la température de l'objet.

L'objet en contact avec la face sensible peut être immobile ou au contraire se déplacer sur cette face sensible. Par exemple, le doigt peut balayer la face sensible. Un tel balayage permet de relever un motif thermique qui s'étend sur une surface strictement supérieure à la surface de la face sensible. Un tel procédé est décrit dans la demande de brevet US 6 289 114.

Une même puce électronique peut comporter une ou plusieurs matrices de pixels et un ou plusieurs circuits de lecture gravés ou déposés sur le substrat de cette puce.

De nombreuses autres applications du détecteur 2 sont possibles. En particulier, le détecteur 2 permet de détecter le motif thermique non seulement d'une empreinte digitale mais de tout autre objet présentant un motif thermique tel qu'un billet de banque ou un tissu.

Par exemple, il n'est pas nécessaire dans toutes les applications qu'il y ait un contact direct entre la face sensible et l'objet. Ainsi, la puce électronique décrite ici peut aussi être utilisée en tant que caméra thermique.

Il n'est pas non plus nécessaire que l'objet présente des crêtes et des creux pour présenter un motif thermique. En fait, la surface de l'objet peut être uniformément plane. Dans ce cas, le motif thermique correspond à des différences locales de caractéristiques thermiques détectables par les pixels de la puce. Par exemple, l'objet peut être un doigt dont l'empreinte digitale est totalement usée. En effet, même dans ce cas où l'épiderme ne présente plus de creux et de crête, cet épiderme présente encore des différences de caractéristiques locales décelables par la puce électronique comme expliqué dans la demande de brevet EP 0 825 831.

L'oxydation de la face supérieure de l'électrode supérieure peut être mise en oeuvre indépendamment des autres caractéristiques du pixel de détection décrit ci-dessus. Par exemple, l'électrode supérieure oxydée peut être mise en oeuvre avec d'autres couches en matériau pyroélectrique que celles réalisées à base de nitrure d'aluminium ou de nitrure 111-V.

De façon similaire, les différents modes de réalisation de la résistance chauffante décrits ici peuvent être mis en oeuvre indépendamment des autres caractéristiques du transducteur. Par exemple, la réalisation de la résistance chauffante par une bande résistive qui divise l'électrode en plusieurs plaques peut être mise en oeuvre indépendamment des autres caractéristiques du pixel de détection décrit ci-dessus. En particulier, cette conformation de l'électrode peut être mise en oeuvre quel que soit le matériau pyroélectrique utilisé; cependant, un tel mode de réalisation n'est pas couvert par la portée des revendications, quand le matériau pyroélectrique n'est pas un nitrure III-V.

Enfin, les différentes caractéristiques du détecteur nécessaire pour mettre en oeuvre le procédé de calibration décrit ici peuvent être mises en oeuvre indépendamment des autres caractéristiques de ce détecteur et en particulier indépendamment du matériau pyroélectrique utilisé; cependant, de tels modes de réalisation ne sont pas couverts par la portée des revendications, quand le matériau pyroélectrique n'est pas un nitrure III-V.

**Revendications**

1. Transducteur de variation temporelle de température en une différence de potentiels, ce transducteur comportant :

   - une électrode conductrice supérieure (40) destinée à être exposée à la variation temporelle de température à mesurer,
   - une électrode conductrice inférieure (42),
   - au moins une couche (44) en matériau pyroélectrique directement interposée entre ces électrodes pour générer entre ces électrodes la différence de potentiels correspondant à la variation de température, même en absence de contrainte mécanique extérieure,

   **caractérisé en ce que** le matériau pyroélectrique est à base de nitrure III-V.

2. Transducteur selon la revendication 1, dans lequel le matériau pyroélectrique est à base de nitrure d'aluminium.

3. Transducteur selon la revendication 1 ou 2, dans lequel l'électrode supérieure (40) est réalisée en molybdène ou en titane.

4. Transducteur selon l'une quelconque des revendications précédentes, dans lequel l'électrode supérieure (40) est réalisée dans un métal conducteur dont seule la face supérieure opposée à la face en contact avec la couche en matériau pyroélectrique est oxydée de manière à modifier sa couleur par rapport au cas où cette électrode supérieure ne serait pas oxydée.

5. Transducteur selon l'une quelconque des revendications précédentes, dans lequel le transducteur comporte un substrat (16) sur lequel sont empilées au moins l'électrode inférieure, la couche pyroélectrique puis l'électrode supérieure.

6. Transducteur selon l'une quelconque des revendications précédentes, dans lequel l'épaisseur de la couche (44) en matériau pyroélectrique est supérieure à 0,5 $\mu$m ou 0,6 $\mu$m ou 1 $\mu$m.

7. Puce électronique pour la détection de motif thermique, **caractérisé en ce que** cette puce comporte :

   - au moins un transducteur de variation temporelle de température en une différence de potentiels conforme à l'une quelconque des revendications précédentes,
   - au moins une résistance (46) se présentant sous la forme d'une bande résistive gravée dans une même couche que l'électrode inférieure et/ou supérieure du transducteur pour chauffer la couche pyroélectrique (44) de ce transducteur lors qu'elle est parcourue par un courant, la bande résistive traversant cette électrode de manière à la diviser en au moins deux plaques séparées (60, 61, 62), et
   - des plots électriques (70, 71, 72) permettant de court-circuiter électriquement les plaques séparées par-dessus et/ou par-dessous le plan de la couche dans laquelle la bande résistive est formée.

8. Puce selon la revendication 7, dans laquelle :

- la puce comprend un réseau de transducteurs répartis les uns à côté des autres pour former une face sensible (4) sur laquelle un objet présentant le motif thermique à détecter peut venir en appui, et
- l'électrode supérieure ou inférieure (42) de chaque transducteur présente une surface d'au plus 0,5 mm² et le centre de cette électrode est séparé du centre de l'électrode du transducteur immédiatement contigu par une distance d'au plus 0,5 mm.

9. Procédé collectif de fabrication de plusieurs puces électroniques comportant chacune au moins un transducteur conforme à l'une quelconque des revendications 1 à 6 et un circuit de lecture de ce transducteurs, ce procédé comportant :

- le dépôt (104) et la gravure (106) sur un substrat de l'électrode conductrice inférieure simultanément pour tous les transducteurs des différentes puces électroniques fabriquées sur le même substrat,
- le dépôt (108) d'au moins une couche en matériau pyroélectrique simultanément pour tous les transducteurs des différentes puces fabriquées sur le même substrat,
- le dépôt (112) et/ou la gravure de l'électrode conductrice supérieure simultanément pour tous les transducteurs des différentes puces fabriquées sur ce même substrat pour que la couche en matériau pyroélectrique génère une différence de potentiels entre ces électrodes en réponse à une variation de température même en absence de contrainte mécanique extérieure, et
- le découpage (118) du substrat pour séparer mécaniquement les différentes puces électroniques fabriquées,

**caractérisé en ce que** lors du dépôt (108) de la couche en matériau pyroélectrique, cette couche est réalisée à base de nitrure III-V.

10. Procédé selon la revendication 9, dans lequel le procédé comporte l'oxydation (114) de la face supérieure de l'électrode supérieure tournée du côté opposé à la couche en matériau pyroélectrique simultanément pour tous les transducteurs des différentes puces électroniques fabriquées sur le même substrat.

**Claims**

1. Transducer of temporal temperature variation into a potential difference, this transducer comprising:

- a top conductive electrode (40) intended to be exposed to the temporal temperature variation to be measured,
- a bottom conductive electrode (42),
- at least one layer (44) of pyroelectric material directly interposed between these electrodes to generate between these electrodes the potential difference corresponding to the temperature variation, even in the absence of external mechanical stress, **characterized in that** the pyroelectric material is based on III-V nitride.

2. Transducer according to Claim 1, in which the pyroelectric material is based on aluminium nitride.

3. Transducer according to Claim 1 or 2, in which the top electrode (40) is made of molybdenum or of titanium.

4. Transducer according to any one of the preceding claims, in which the top electrode (40) is made of a conductive metal of which only the top face opposite the face in contact with the layer of pyroelectric material is oxidized so as to modify its colour in comparison to the case where this top electrode would not be oxidized.

5. Transducer according to any one of the preceding claims, in which the transducer comprises a substrate (16) on which are stacked at least the bottom electrode, the pyroelectric layer then the top electrode.

6. Transducer according to any one of the preceding claims, in which the thickness of the layer (44) of pyroelectric material is greater than 0.5 $\mu$m or 0.6 $\mu$m or 1 $\mu$m.

7. Electronic chip for heat pattern detection, **characterized in that** this chip comprises:

- at least one transducer of temporal temperature variation into a potential difference conforming to any one of the preceding claims,
- at least one resistor (46) taking the form of a resistive strip etched into one and the same layer as the bottom and/or top electrode of the transducer to heat the pyroelectric layer (44) of this transducer when it is passed through by a current, the resistive strip passing through this electrode so as to divide it into at least two separate plates (60, 61, 62), and
- electrical bump contacts (70, 71, 72) making it possible to electrically short circuit the separate plates above and/or below the plane of the layer in which the resistive strip is formed.

8. Chip according to Claim 7, in which:

   - the chip comprises a network of transducers distributed alongside one another to form a sensitive face (4) on which an object exhibiting the heat pattern to be detected can bear, and
   - the top or bottom electrode (42) of each transducer has a surface area of at most 0.5 mm$^2$ and the centre of this electrode is separated from the centre of the electrode of the immediately contiguous transducer by a distance of at most 0.5 mm.

9. Collective method for fabricating a plurality of electronic chips each comprising at least one transducer conforming to any one of Claims 1 to 6 and a circuit for reading these transducers, this method comprising:

   - the deposition (104) and the etching (106) on a substrate of the bottom conductive electrode simultaneously for all the transducers of the different electronic chips fabricated on the same substrate,
   - the deposition (108) of at least one layer of pyroelectric material simultaneously for all the transducers of the different chips fabricated on the same substrate,
   - the deposition (112) and/or the etching of the top conductive electrode simultaneously for all the transducers of the different chips fabricated on this same substrate so that the layer of pyroelectric material generates a potential difference between these electrodes in response to a temperature variation even in the absence of external mechanical stress, and
   - the cutting (118) of the substrate to mechanically separate the different electronic chips fabricated,

   **characterized in that**, in the deposition (108) of the layer of pyroelectric material, this layer is produced based on III-V nitride.

10. Method according to Claim 9, in which the method comprises the oxidation (114) of the top face of the top electrode facing the side opposite the layer of pyroelectric material simultaneously for all the transducers of the different electronic chips fabricated on the same substrate.

**Patentansprüche**

1. Wandler zum Umwandeln einer zeitlichen Temperaturvariation in eine Potentialdifferenz, wobei dieser Wandler Folgendes aufweist:

   - eine obere leitfähige Elektrode (40), die dazu bestimmt ist, der zu messenden zeitlichen Temperaturvariation ausgesetzt zu werden,
   - eine untere leitfähige Elektrode (42),
   - mindestens eine Schicht (44) aus pyroelektrischem Material, die direkt zwischen diesen Elektroden eingefügt ist, um sogar bei Nichtvorhandensein einer äußeren mechanischen Beanspruchung zwischen diesen Elektroden die Potentialdifferenz zu erzeugen, die der Temperaturvariation entspricht,

   **dadurch gekennzeichnet, dass** das pyroelektrische Material auf Nitrid III-V basiert.

2. Wandler nach Anspruch 1, wobei das pyroelektrische Material auf Aluminium-Nitrid basiert.

3. Wandler nach Anspruch 1 oder 2, wobei die obere Elektrode (40) aus Molybdän oder aus Titan ausgeführt ist.

4. Wandler nach einem der vorhergehenden Ansprüche, wobei die obere Elektrode (40) aus einem leitfähigen Metall ausgeführt ist, von dem einzig die obere Fläche, die der Fläche entgegengesetzt ist, die mit der Schicht aus pyroelektrischem Material in Berührung ist, derart oxidiert ist, dass ihre Farbe im Vergleich zum Fall, in dem diese obere Elektrode nicht oxidiert wäre, verändert ist.

5. Wandler nach einem der vorhergehenden Ansprüche, wobei der Wandler ein Substrat (16) aufweist, auf dem mindestens die untere Elektrode, die pyroelektrische Schicht und dann die obere Elektrode aufeinandergeschichtet sind.

6. Wandler nach einem der vorhergehenden Ansprüche, wobei die Dicke der Schicht (44) aus pyroelektrischem Material größer als 0,5 $\mu$m, 0,6 $\mu$m oder 1 $\mu$m ist.

7. Elektronischer Chip zur Ermittlung thermischer Muster, **dadurch gekennzeichnet, dass** dieser Chip Folgendes aufweist:

- mindestens einen Wandler zum Umwandeln einer zeitlichen Temperaturvariation in eine Potentialdifferenz nach einem der vorhergehenden Ansprüche,
- mindestens einen Widerstand (46), der die Form eines Widerstandsstreifens aufweist, der in eine selbe Schicht geätzt ist wie die untere und/oder obere Elektrode des Wandlers, zum Erwärmen der pyroelektrischen Schicht (44) dieses Wandlers, wenn sie durch einen Strom durchflossen wird, wobei der Widerstandsstreifen diese Elektrode derart durchquert, dass sie in mindestens zwei getrennte Platten (60, 61, 62) getrennt wird, und
- elektrische Kontakte (70, 71, 72), die es ermöglichen, die getrennten Platten von über und/oder unter der Ebene der Schicht, in der der Widerstandsstreifen gebildet ist, kurzzuschließen.

8. Chip nach Anspruch 7, wobei:

- der Chip ein Netz von Wandlern aufweist, die nebeneinander verteilt sind, um eine empfindliche Fläche (4) zu bilden, auf der ein Objekt, das das zu ermittelnde thermische Muster aufweist, zur Anlage gelangen kann, und
- die obere oder untere Elektrode (42) jedes Wandlers eine Fläche von höchstens 0,5 mm$^2$ aufweist und der Mittelpunkt dieser Elektrode vom Mittelpunkt der Elektrode des unmittelbar angrenzenden Wandlers durch eine Entfernung von höchstens 0,5 mm getrennt ist.

9. Verfahren zur gemeinsamen Herstellung mehrerer elektronischer Chips, die jeweils einen Wandler nach einem der Ansprüche 1 bis 6 und eine Schaltung zum Lesen dieser Wandler aufweisen, wobei dieses Verfahren Folgendes aufweist:

- Abscheiden (104) und Ätzen (106) der unteren leitfähigen Elektrode auf einem Substrat, gleichzeitig für alle Wandler der auf demselben Substrat hergestellten verschiedenen elektronischen Chips,
- Abscheiden (108) von mindestens einer Schicht aus pyroelektrischem Material, gleichzeitig für alle Wandler der verschiedenen auf demselben Substrat hergestellten Chips,
- Abscheiden (112) und/oder Ätzen der oberen leitfähigen Elektrode, gleichzeitig für alle Wandler der verschiedenen auf diesem selben Substrat hergestellten Chips, damit die Schicht aus pyroelektrischem Material sogar beim Nichtvorhandensein einer äußeren mechanischen Beanspruchung als Reaktion auf eine Temperaturvariation eine Potentialdifferenz zwischen den Elektroden erzeugt, und
- Schneiden (118) des Substrats, um die verschiedenen hergestellten Chips mechanisch zu trennen,

**dadurch gekennzeichnet, dass** diese Schicht beim Abscheiden (108) der Schicht aus pyroelektrischem Material auf Basis von Nitrid III-V ausgeführt wird.

10. Verfahren nach Anspruch 9, wobei das Verfahren das Oxidieren (114) der oberen Fläche der oberen Elektrode aufweist, die auf die Seite gedreht ist, die der Schicht aus pyroelektrischem Material entgegengesetzt ist, gleichzeitig für alle Wandler der verschiedenen auf demselben Substrat hergestellten elektronischen Chips.

Fig. 1

Fig. 3

Fig. 4

Fig. 7

Fig. 2

Fig. 8

Fig. 9

Fig. 5

Fig. 10

Fig. 6

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4429413 A
- EP O840250 A1
- FR 2736179 A1
- DE 19634849 A1

- US 7032454 B
- US 6091837 A
- US 6289114 B
- EP 0825831 A

**Littérature non-brevet citée dans la description**

- 33.7 Pyroelectric Thermometer. **JACOB FRADEN.** Measurment instrumentation, and sensors hand-book. CRS Press and Spinger, 01 Janvier 1999, 32-10932-117